# EUROPEAN PATENT APPLICATION

(11) **EP 3 070 886 A1**
(43) Date of publication of application: **21.09.2016**
(21) Application number: 15159430.6
(22) Date of filing: 17.03.2015
(51) Int. Cl.: H04L 12/42

(54) **PATH DELAY DETERMINATION IN RING NETWORKS**

(71) Applicant: ABB Technology AG, 8050 Zürich (CH)
(72) Inventor: Kirrmann, Hubert, 5405 Dättwil (CH); Celli, Roberto, 5432 Neuenhof (CH)
(74) Representative: ABB Patent Attorneys

(57) **Abstract**

The present invention is concerned with synchronizing output and/or input activities at a plurality of slave nodes communicatively connected to a master node without a separate clock synchronization scheme. A method is proposed that allows a slave to evaluate how long ago a message of the master was produced without previous clock synchronization, based on a path delay difference experienced by two frames prepared concurrently by the master and sent over two distinct paths to the slave. This method applies to ring or loop networks, but can be extended to meshed network topologies with two distinct paths between master and slave, where a frame of interest sent over a first path returns back to the sender over a second path.

## Description

### FIELD OF THE INVENTION

The invention relates to the field of industrial communication, in particular to communication networks with a plurality of slave nodes communicatively connected to a master node and acting synchronously on an industrial process.

### BACKGROUND OF THE INVENTION

Time-critical systems with a plurality of system nodes require precisely synchronized data input (e.g. process values sampled all at the same time) and/or data output (e.g. switching commands simultaneously issued to power electronic switching devices) at the nodes. Such systems or applications rely on deterministic delivery delays for data transmission to or from system nodes and tolerate only sub-microsecond jitter. Applications include control of power electronic devices, precision drive control, protection of electrical systems and particle physics experiments. In such applications, a master node broadcasts a message to a number of slave or destination nodes which all should at a same time sample their input or activate their output. This message suffers delivery delays to the individual input/output nodes due to physical medium (inter-node link delay) and processing logic (intra-node residence delay). A total delivery delay thus depends on the position of the destination device in the network and on the path that the message travels, in particular on the number of forwarding devices.

Conventionally, the slaves receive a command containing the precise time at which the command must be executed, which assumes that the clocks of all slaves are synchronized. According to IEEE 1588 Precision Time Protocol PTP a master clock distributes absolute time over a number of transparent clocks to slave clocks. This protocol allows to synchronize slave clocks in the input/output devices, such that these clocks can trigger the input/output activity at a precise point in time. Due to the jitter in the transparent clocks, only a precision of 1 microsecond is achievable, while the accuracy expected from a master clock is of 100 nanoseconds. According to IEEE 1588, residence delay calculation at the transparent nodes is only performed for dedicated synchronization messages, but not for data messages, and link delays are calculated by a network clock (slave clock, transparent clock or boundary clock) exclusively for the links to the immediate neighbors of the network clock.

Ring networks present several advantages with respect to redundancy and modularity compared to tree networks, but introduce path delays which depend on a position of the slave in the ring. Such position-dependent delays need to be compensated to obtain synchronous sampling or output. Hence there is a need for a path delay evaluation with 100 nanoseconds uncertainty and without dedicated clock synchronization protocols or previous configuration or engineering efforts, which ultimately results in a synchronization superior to PTP for a same quartz quality at the slave nodes.

### DESCRIPTION OF THE INVENTION

It is an objective of the invention to synchronize output and/or input activities at a plurality of slave nodes communicatively connected to a master node with no need for a separate clock synchronization scheme. These objectives are achieved by a method and a slave node according to the independent claims. Preferred embodiments are evident from the dependent patent claims.

According to the invention, a method is proposed that allows a slave to evaluate how long ago a message of the master was produced without previous clock synchronization, based on a path delay difference experienced by two frames prepared concurrently by the master and sent over two distinct paths to the slave. This method applies to ring or loop networks, but can be extended to meshed network topologies with two distinct paths between master and slave, where a frame of interest sent over a first path returns back to the sender over a second path, and where no common mode failure can affect both paths in the same way.

Specifically, in a communication network with a master clock and a slave clock, wherein master ports A, B of the master are connected to slave ports B, A of the slave via two distinct paths together forming a loop or a ring, wherein each path has a path residence time delay as a sum of the intra-node residence delays of the intermediate nodes of the path and wherein each path has a path link delay as a sum of the inter-node link delays between the nodes of the path, a method of determining a time delay comprises:
- determining, by the master, a loop link delay equal to the sum of the path link delays of the loop comprising the first and the second path;
- sending, by the master, a first copy and a second copy of a frame over the first and the second path, respectively, to the slave;

- recording, by the slave, an ingress time difference between the arrival of the first frame copy at slave port B and of the second frame copy at slave port A;
- deducing or calculating, by the slave, a link delay difference between the path link delay of the first path and the path link delay of the second path, from the ingress time difference and from the path residence delays of the first and second path; and
- deducing a path link delay of the first and/or the second path from the loop link delay and from the link delay difference.

In a preferred variant of the invention, the loop link delay is determined by
- circulating, or looping, a test loop frame from the master along the first path to the slave and along the second path back to the master; and by
- deducing, by the master, the loop link delay from a master egress time and a master ingress time of the frame at the master, and from a loop residence delay including a sum of the path residence delay of the first path and the path residence delay of the second path.

In a further preferred variant, the loop link delay is determined by
- adding, by each node along the first and second path, the intra-node residence delay of the node to a delay correction field of the frame, and by
- deducing the loop link delay from a loop residence delay value of the delay correction field of the frame at master ingress time.

In an advantageous embodiment of the invention, the link delay difference is determined by
- preparing, by the master, the first and the second frame copy at master time to;
- saving, in a delay correction field of the first and the second frame copy, a master residence delay indicative of a delay between the master time to and a respective master egress time of the first and second frame copy;
- adding, by each node along the first and second path, the intra-node residence delay of the node to the delay correction field of the respective frame copy, and
- deducing, by the slave, the link delay difference from the ingress time difference and from a difference between the values of the delay correction field of the first and of the second frame copy, at the slave ingress time of the respective frame copy.

The slave node may calculate a path delay of the first path as a sum of the path link delay and the residence delay of the first path, to further determine an exact time elapsed between a master time stamp preceding egress of the frame copy from the master and a slave time stamp following ingress of the frame copy at the slave. In this manner, slave trigger times may be determined by a plurality of slaves in a converter or other primary system in view of synchronized input and/or output action by the slaves.

### BRIEF DESCRIPTION OF THE DRAWINGS

The subject matter of the invention will be explained in more detail in the following text with reference to preferred exemplary embodiments which are illustrated in the attached drawings, of which
Fig.1 illustrates a bidirectional sending of data frames in a ring network; and
Fig.2 depicts an exemplary frame structure.

### DETAILED DESCRIPTION OF PREFERRED EMBODIMENTS

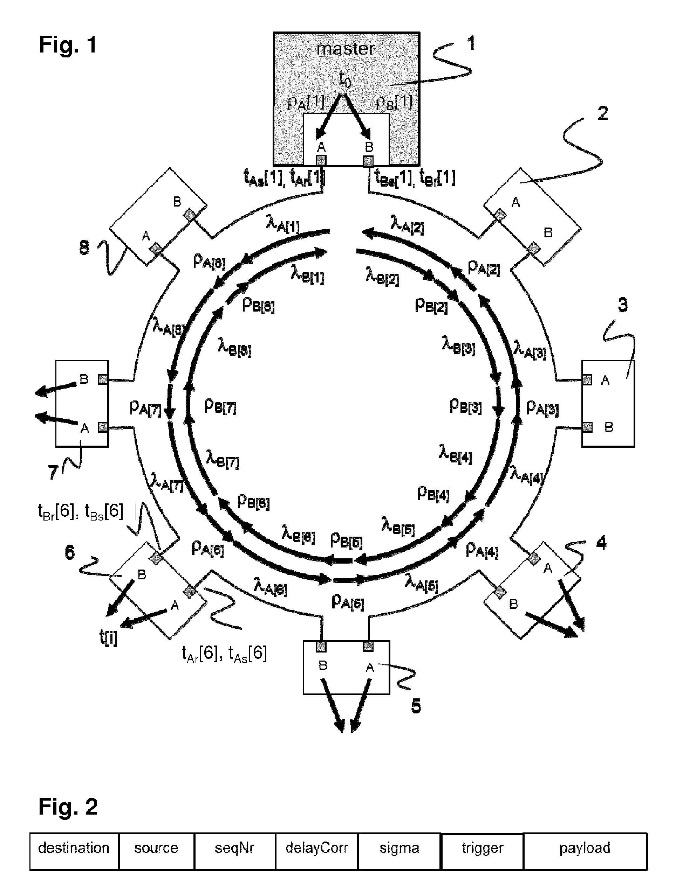

Fig.1 illustrates a bidirectional sending of data frames in a ring network including a master node 1 and seven slave nodes 2 ... 8 arranged in a loop. The protocol operates as follows:
1. In order to determine an initial loop link delay ∑λ the master 1 prepares a loop test frame at an instant to in time. The time t₀ is stored at the master and/or included in the frame. Subsequently, any regular data frame may likewise be used to update the loop link delay.
2. The master sends a copy or instance A of this frame over master port A at instant (egress or send time) t_{As}[1] in the counter-clockwise direction (CCW) and a copy or instance B of this frame over master port B at instant t_{Bs}[1] in the clockwise direction (CW). Since the ports have different delays, the master timestamps the frames at egress and introduce the residence delays ρ_{A}[1] = (t_{As}[1] - to) and ρ_{B}[1] = (t_{Bs}[1] - to) as initial correction in a correction field of the frame - thus the two frames A and B differ at least by their correction field and checksum.
   In an alternative embodiment, the egress time stamps t_{As}[1] and t_{Bs}[1] are stored at the master, while the correction fields of the two outgoing frames remain empty.
3. The two frames transit through the nodes of the ring until they return to the master, which will remove the frames from the ring.
4. Each node in the ring time-stamps, with his own slave clock independent of the master clock, the CCW frame at ingress or receive time (t_{Br}[i]) and at egress (t_{As}[i]) and adds a local, intra-node residence delay ρ_{A}[i] = (t_{As}[i] - t_{Br}[i]) to the correction field to establish an egress correction field value ∑ρ_{A}[i] = ∑ρ_{A}[i+1] + ρ_{A}[i]. In the CW direction, the residence delay ρ_{B}[i] = (t_{Bs}[i] - t_{Ar}[i]) is added to the correction field to establish an egress correction field value ∑ρ_{B}[i] = ∑ρ_{B}[i-1] +ρB[i]. The ingress and egress time-stamps are exemplified for node [i=6] in Fig.1.
5. The master receives the CCW frame over port B and timestamps it at reception at time t_{Br}[1]. The value of the correction field at that moment is denoted ∑ρ_{A} = ∑ρ_{A}[2]. The CW frame is received at time t_{Ar}[1] over port A, with a correction field value ∑ρ_{B} = ∑ρ_{B}[8].
6. The master calculates a sum of the inter-node link delays in the ring as ∑λ_{A} = (t_{Br}[1] - to) - ∑ρ_{A} (CCW) and ∑λ_{B} = (t_{Ar}[1] - to) - ∑ρ_{B} (CW). If the two sums are found to be identical, there is no link delay asymmetry, and a unique loop link delay may be denoted ∑λ = ∑λ_{A} = ∑λ_{B}. Under the assumption of a negligible link delay asymmetry a single frame travelling either in CCW or CW direction would be sufficient.
   In the alternative embodiment, the original egress time stored at the master may be considered to determine the sum of the link delays as ∑λ_{A} = (t_{Br}[1] - t_{As}[1]) - (∑ρ_{A} - ρ_{A}[1]) (CCW) and ∑λ_{B} = (t_{Ar}[1] - t_{Bs}[1]) - (∑ρ_{B} - ρ_{B}[1]) (CW), respectively, where the terms (∑ρ_{A} - ρ_{A}[1]) and (∑ρ_{B} - ρ_{B}[1]) to be subtracted correspond to the respective values of the correction field (ignoring the initial residence delays at the master).
7. The loop link delay ∑λ is communicated to all the slave nodes, preferably by writing the loop link delay to the sigma field of a follow-up frame transmitted after the loop link delay determination. Assuming that the loop link delay ∑λ remains stable for some time, the slaves will store the loop link delay at least until a more recent update value is communicated. Hence, the loop link delay determination may be repeated at predefined intervals, e.g. once per second. The follow-up frame may again be a loop test frame or a data frame comprising, at the same time, exemplary trigger time information and a correction field as detailed next.
8. A data frame is prepared by the master, including a trigger time Δt relative to to and indicating at which time an operation shall be carried out synchronously by a plurality of nodes. As noted above in points 2 and 4, frame duplicates or copies are circulated in CCW and CW direction in the ring, with each slave time-stamping the frames and adding a residence delay ρ_{A}[i], ρ_{B}[i] to the correction field of the frame.
9. Each receiving slave node [i] can compute the difference Δλ[i] between the link delays in CW and CCW direction to the master as the difference in the arrival time of the frame duplicates minus the accumulated residence delay values in the respective correction fields upon frame ingress as Δλ[i] = (t_{Ar}[i] - t_{Br}[i]) - ∑ρ_{A}[i+1] + ∑ρ_{B}[i-1]. Again, this difference is computed based on time-stamps of slave clocks that are not necessarily synchronized with the master clock.
10. Knowing the difference Δλ[i] and the sum ∑λ of the link delays, each node can calculate the link delays in both directions to the master. In CCW direction as ∑λ_{A}[i] = (∑λ - Δλ[i]) / 2 and in CW direction as ∑λ_{B}[i] = (∑λ + Δλ[i]) / 2.
11. Each node can then calculate the exact time at the master clock corresponding to the ingress times t_{Ar}[i] and t_{Br}[i] at the slave clock as t_{A}[i] = to + ∑ρ_{A}[i+1] + ∑λ_{A}[i], or as t_{B}[i]= to + ∑ρ_{B}[i-1] + ∑λ_{B}[i], where any residual inconsistency between these values may be due to asymmetries in the link delays and inaccuracies in the time-stamping of all nodes. Hence the nodes may determine individually the idle or wait time to a next action at a predefined trigger time to + Δt as per the master clock.
12. Optionally, the master can deduce a loop link asymmetry or loop link delay difference as the difference of the loop link delays in the two directions, and communicate such loop link asymmetry to the slaves for compensation if appropriate.

Fig.2 depicts an exemplary frame structure of a follow-up data frame with a correction field, a sigma field and a trigger time field.

Each node can execute this protocol with an FPGA or dedicated silicon. The performance requirements on a slave clock or quartz are modest, since only stability between ingress and egress time is needed. The method can be executed with all frames transmitted by the master, there is no need for a special clock protocol with dedicated synchronization messages.

If a node in the first path is removed or otherwise inoperable, the loop or ring is opened, and the path link delay calculation or update is impeded. However, this situation is not critical since the link delays normally do not vary. Each device can keep the latest value in memory until the ring is restored. Where a better monitoring of the link delays is needed, the end nodes next to the inoperable node may respond to the master with a status report containing the residence delay of the turn-around message. The master treats both end nodes independently.

The proposed method can be extended to hierarchical rings and to rings with multi-masters, in which case the slave or destination nodes track a loop link delay per master node. The method is applicable to meshed network topologies with two distinct or separate paths between master and slave, where each path is defined by a path-specific and invariable succession of intermediate nodes interconnected via inter-node links, and where a frame or message of interest is always sent over the first path to the destination and always returned back to the sender over the second path.

While the invention has been described in detail in the drawings and foregoing description, such description is to be considered illustrative or exemplary and not restrictive. Variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. The mere fact that certain elements or steps are recited in distinct claims does not indicate that a combination of these elements or steps cannot be used to advantage, specifically, in addition to the actual claim dependency, any further meaningful claim combination shall be considered disclosed.

## Claims

1. A method of determining a time delay between a master (1) and a slave (6) in a communication network, wherein the master is connected to the slave via a first path and via a second path distinct from the first path, each path including a plurality of intermediate nodes having intra-node residence delays for message forwarding and being connected via inter-node links with link delays for message propagation, each path having a path residence delay as a sum of all intra-node residence delays of the nodes of the path and a path link delay as a sum of all inter-node link delays between the nodes of the path, comprising:
- determining a loop link delay ∑λ equal to the sum of the path link delays of the first and the second path;
- sending, by the master, a first copy and a second copy of a frame over the first and the second path, respectively, to the slave;
- recording, by the slave, an ingress time difference between a slave ingress time t_{Ar}[i] of the first frame copy and a slave ingress time t_{Br}[i] of the second frame copy;
- deducing a link delay difference Δλ[i] between the path link delay of the first path and the path link delay of the second path, from the ingress time difference and from a difference between the path residence delay ∑ρ_{A}[i+1] of the first path and the path residence delay ∑ρ_{B}[i-1] of the second path; and
- deducing the path link delay ∑λ_{A}[i] of the first path from the loop link delay and from the link delay difference.

2. The method of claim 1, comprising
- circulating a frame from the master along the first path to the slave and subsequently along the second path back to the master,
- deducing, by the master, the loop link delay from a master egress time t_{As}[1] and a master ingress time t_{Br}[1] of the frame at the master, and from the path residence delay ∑ρ_{A}[i+1] of the first path and the path residence delay ∑ρ_{B}[i-1] of the second path.

3. The method of claim 2, comprising
- adding, by each node along the first and second path, the intra-node residence delay ρ[i] of the node to a delay correction field of the frame, and
- deducing the loop link delay from a value ∑ρ_{B}[7] of the delay correction field of the frame at master ingress time.

4. The method of claim 1, comprising
- preparing, by the master, the first and the second frame copy at master time to;
- saving, in a delay correction field of the first and the second frame copy, a master residence delay ρ_{A}[1], ρ_{B}[1] indicative of a delay between the master time to and a respective master egress time t_{As}[1], t_{Bs}[1] of the first and second frame copy;
- adding, by each node along the first and second path, the intra-node residence delay ρ_{A}[i], ρ_{B}[i] of the node to the delay correction field of the respective frame copy, and
- deducing, by the slave, the link delay difference from the ingress time difference and from values ∑ρ_{A}[i+1], ∑ρ_{B}[i-1], at the slave ingress time of the first and of the second frame copy, of the delay correction field of the respective frame copy.

5. The method of any of claims 1 to 4, comprising
- calculating, by the slave node, based on the path link delay and the path residence delay of the first path, a path delay of the first path.

6. The method of claim 5, comprising
- storing, in the first frame copy, a master trigger time to + Δt; and
- determining, by the slave, a slave trigger time based on the master trigger time and the path delay time.

7. A slave node (6) in a communication network with a master node (1) connected to the slave via a first path and via a second path distinct from the first path, each path including a plurality of intermediate nodes having intra-node residence delays ρ_{A}[i], ρ_{B}[i] for message forwarding and being connected via inter-node links with link delays for message propagation, each path having a path residence delay ∑ρ_{A}[i+1], ∑ρ_{B}[i-1] as a sum of all intra-node residence delays of the nodes of the path and a path link delay ∑λ_{A}[i], ∑λ_{B}[i] as a sum of all inter-node link delays between the nodes of the path, the slave node being configured to
- obtain a loop link delay ∑λ equal to the sum of the path link delays;
- record an ingress time difference between a slave ingress time t_{Ar}[i] of a first frame copy sent by the master over the first path and a slave ingress time t_{Br}[i] of a second frame copy sent by the master over a second path;
- deduce a link delay difference Δλ[i] between the path link delay of the first path and the path link delay of the second path, from the ingress time difference and from a difference between the path residence delay ∑ρ_{A}[i+1] of the first path and the path residence delay ∑ρ_{B}[i-1] of the second path; and
- deducing the path link delay ∑λ_{A}[i] of the first path from the loop link delay and from the link delay difference.
